Europäisches Patentamt

European Patent Office

Office européen des brevets

(11) Publication number: **0 239 338 B1**

## EUROPEAN PATENT SPECIFICATION

(45) Date of publication of patent specification: **23.10.91**  (51) Int. Cl.⁵: **F16L 47/00**

(21) Application number: **87302458.2**

(22) Date of filing: **23.03.87**

(54) **End connectors for filament wound tubes.**

(30) Priority: **24.03.86 US 843425**
**17.02.87 US 15825**

(43) Date of publication of application:
**30.09.87 Bulletin 87/40**

(45) Publication of the grant of the patent:
**23.10.91 Bulletin 91/43**

(84) Designated Contracting States:
**DE FR GB**

(56) References cited:
**DE-A- 3 306 192**
**DE-U- 7 817 369**
**GB-A- 948 439**
**US-A- 4 647 078**

(73) Proprietor: **HERCULES INCORPORATED**
**Hercules Plaza**
**Wilmington Delaware 19894(US)**

(72) Inventor: **Policelli, Frederick Joseph**
**4891 Wallace Lane**
**Salt Lake City Utah 84117(US)**

(74) Representative: **De Minvielle-Devaux, Ian**
**Benedict Peter et al**
**CARPMAELS & RANSFORD 43, Bloomsbury**
**Square**
**London WC1A 2RA(GB)**

Rank Xerox (UK) Business Services

## Description

This invention relates to filament wound tubes that are connectable with other bodies, so as to transmit torsional as well as radial and axial forces in such applications as oil field drilling pipe, drive shafts for transmitting rotary power and suspension components for heavy ground vehicles.

Filament winding is a well known technique for making composite tubes using high strength filaments such as carbon (graphite) fiber and thermosetting resin. Compared to tubes made of metal such as steel that have equivalent strength, the filament wound tubes are considerably lighter in weight, normally have better fatigue resistance, and do not corrode.

However, when a composite tube needs to be connected to another body in a manner enabling torque transmission there may be problems in providing suitable connectors. Connectors that have been proposed in the prior art for this purpose include, for example, rivets or pins that are inserted through holes drilled in the tubes.

Cutting holes in a composite tube are undesirable in many applications. For example, in oil field drilling pipe, the tube needs to be impermeable to highly pressurized fluids and effective sealing of the holes in the pipe is difficult. Moreover, when significant torsional and bending loads are applied to the tubes having such pins, rivets and the like, these fasteners undergo significant loads and may break or otherwise cause excessive wear around the holes in the composite tube.

It is desirable to provide reliable means for axially connecting composite tubes to other bodies without the need for installing through-the-wall fasteners such as rivets or pins that destroy the integrity of the tubes, while enabling the composite tubes to transmit high torsional and axial forces to the other bodies, in addition to internal pressure.

According to the invention a filament wound composite tube with a, a coupling assembly for axially connecting the filament-wound composite tube to another body is characterized in that the tube has a body component, an end component having a generally polygonal inner configuration and a greater minimum inner radial dimension than the body component, and a tapered annular ramp component integrally connecting the body component and the end component, the wound filaments extending from the end component through the ramp component to a location within the body component remote from the ramp component; the coupling assembly also comprising a locking ring having an outer surface with a threaded section and a gripping-access section and an inner surface with a cylindrical section and an outwardly tapered ramp section adapted to mate the ramp of the tube, the cylindrical section being beneath the part of the outer-surface threaded section adjacent the gripping-access section and the ramp section being beneath that part of the outer-surface threaded section remote from the gripping-access section; an annular coupling unit having an inner diameter corresponding substantially to the inner diameter of the body component and comprising an extension insertable within the end component of the tube and having a generally polygonal outer configuration that mates snugly with the inner configuration of the end component of the tube, an end connector for connecting the tube to another body, and an externally threaded middle section between the insertable extension and the connector and having an outer diameter greater than the maximum inner radial dimension of the end component of the tube; and a sleeve having internally threaded end sections that are respectvely threadable to the coupling unit and to the ring, the sleeve being slidable over the end component of the tube.

The arrangement of mating polygonal configurations for the coupling extension and the end component of the tube permits high levels of torque to be transmitted through the coupling unit to the filament wound tube.

Preferably, for embodiments of the invention that are to be used as oil field drilling pipes, the filament-wound composite tube includes a conventional liner within the tube, which according to the invention extends within the coupling unit.

In the accompanying drawings, each reference character designates the same element in all the figures.

Figure 1 shows a coupling assembly of this invention, including one end of the filament-wound composite tube 10 axially connected to another body. The drawing is partially in section.

Figure 2 shows a section of the tube in Figure 1 taken along 2-2.

Figure 3 shows an expanded view of a part of Figure 1. The tube body 12 of Figure 1 has tube axis 100 and is made by steps including winding high strength filaments, e.g. carbon, glass, boron or other similar fibers, around a mandrel. The filaments are coated with thermoplastic resin or thermosetting resin (e.g. epoxy or vinyl ester resin) and cured. The tube 12 has an optional liner 15 made of elastomer or thermoplastic material for sealing fluids within tube 12.

The filament-wound tube body 12 has a ramp component 14, and an end component 16. The other end of the tube body, which is not shown, will normally have another connecting assembly. The winding of body component 12, ramp component 14 and end component 16 is conventionally completed in a single operation and the winding filaments extend of continuously from end to end of tube 10. The angle that these filaments lie relative to axis 100 of tube 10 determine its axial, bending and torsional resistance as well as burst pressure. The particular angles chosen for winding are therefore conventional, but preferably the winding angles in ramp and end components 14, 16 will be less than about 80° in the connecting assembly of this invention.

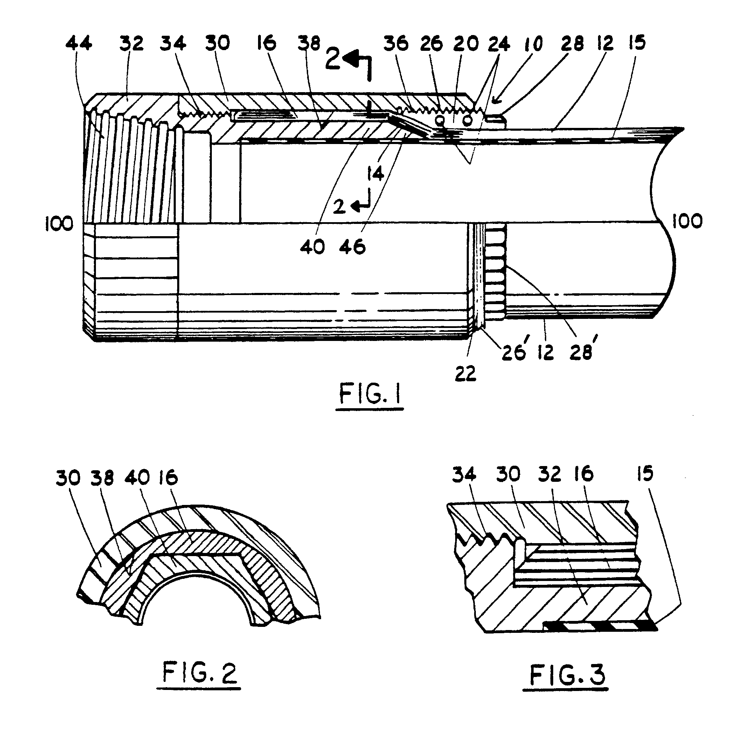

The body component 12 is generally cylindrical, with a circular cross-section. The end component 16, as shown in Figure 2, has a cross-section that has an inner convex polygonal configuration and an outer circular configuration. The ramp component 14 is tapered in the form of a truncated cone from the body component 12 to the polygonal/circular cross-section of end component 16.

The connecting assembly permits the filament-wound tubular body 12 to be connected to another body (not shown) which may also be a filament-wound tube. The connecting assembly comprises, in addition to the end and ramp components 16 and 14, a ring (shown in split form as sections 20 and 22 in Figure 1), an internally threaded sleeve 30, and a coupling unit 32. Coupling unit 32 and sleeve 30 thread together and the split ring, assembled around body section 12, is threaded to the assembly of sleeve 30 and coupling 32.

In an alternative embodiment, the ring (20, 22) is a one-piece annulus instead of being split as shown in Figure 1. The use of a continuous ring permits use of a sleeve 30 which does not have walls as thick thereby reducing the diameter of the joint. The use of an integral ring, however, requires installing the ring over the filament-wound tube prior to forming the offset end and ramp components of the tube.

Referring to Figures 1, 2 and 3, the various elements of connecting tube 10 can be described in greater detail as follows. If a split ring is used, the ring has two segments that are partially shown as segment 20 (partial side elevation) and segment 22 (partial top elevation). These segments 20 and 22 fasten together through slightly oversized pins that insert in holes machined into the end surface of segments 20, 22.

For example, segment 20 of the split ring fastens to segment 22 of the ring through pins (not shown) which fit in holes 24 in segment 20. Correspondingly aligned holes (not shown) in the other end face of segment 20, 180° around tube axis 100, receive still other pins (not shown) for connection. The two segments 20, 22 (or more sections, if desired) when fastened together, form continuous threads around tube axis 100 that include threaded sections 26, 26' of segments 20, 22, a gripping-access section that includes serrations 28, 28' on segments 20, 22 and inner contours that fit the outer contours of the body, and ramp components 12 and 14 of tube 10.

Sleeve 30, like coupling 32 and split ring segments 20, 22, may be made of any suitable high-strength materials such as steel, titanium and the like. The inside surface of sleeve 30 has first and second threaded ends 34 and 36 and a smooth middle section 38 between these threaded ends. The coupling unit 32 also is annular and has an inner diameter corresponding substantially to the inner diameter of the body component 12. It includes an extension 40 (terminating in a tapered end-portion 46) that is insertable within the end component of the tube and has a generally polygonal outer configuration that mates snugly with the inner configuration of the end and rap components 14 and 16 of the tube. The threaded middle part of coupling unit 32 is integral with the insertable extension 40 and threads 44. The latter permit threading tube 10 to another body in sealing relation.

The filament-wound tube 12, 14 and 16 are made on a mandrel having contoured sections bolted around the mandrel axis so that the filaments layed on the mandrel are shaped to form the ramp and end components 14, and 16 as well as body component 12. The filament-wound tube is cured and the mandrel removed. After machining the ramp and end component areas, the coupling unit 32 is slid into place, sleeve 30 is threaded to coupling 32, and the split ring segments 20, 22 are joined around the body component 12 and threaded tightly to sleeve 30.

## Claims

1. A filament wound composite tube with a coupling assembly for axially connecting the filament-wound composite tube (10) to another body, characterized in that the tube has a body component (12), an end component (16) having a generally polygonal inner configuration and a greater minimum inner radial dimension than the body component, and a tapered annular ramp component (14) integrally connecting the body component and the end component, the wound filaments extending from the end component through the ramp component to a location within the body component remote from the ramp component; the coupling assembly also comprising a locking ring (20, 22) having an outer surface with a threaded section (26, 26') and a gripping-access section (28) and an inner surface with a cylindrical section and an outwardly tapered ramp section adapted to mate the ramp of the tube, the cylindrical section being beneath the part of the outer-surface threaded section adjacent the gripping-access section and the ramp section being beneath that part of the outer-surface threaded section remote from the gripping-access section; an annular coupling unit (32) having an inner diameter corresponding substantially to the inner diameter of the body component and comprising an extension (40) insertable within the end component of the tube and having a generally polygonal outer configuration that mates snugly with the inner configuration of the end component of the tube, an end connector (44) for connecting the coupling unit to another body, and an externally threaded middle section between the insertable extension and the connector and having an outer diameter greater than the maximum inner radial dimension of the end component of the tube; and a sleeve (30) having internally threaded end sections (34, 36) that are respectively threaded to the coupling unit and to the ring, the sleeve being slidable over the end component of the tube.

2.  A filament-wound composite tube as claimed in claim 1, further characterized in that it includes a liner (15) within the tube (10) that extends within the coupling unit (32).

**Revendications**

1.  Tube en matériau composite à enroulement de filaments, pourvu d'un ensemble de raccordement permettant de raccorder axialement le tube (10) en matériau composite à enroulement de filaments à un autre corps, caractérisé en ce que le tube comprend un corps (12), une partie terminale (16) ayant une configuration interne généralement polygonale et une dimension radiale interne minimale plus grande que le corps, et une partie conique annulaire formant rampe (14) reliée d'une manière intégrale au corps et à la partie terminale, les filaments enroulés s'étendant à partir de la partie terminale, à travers la partie formant rampe, jusqu'à un emplacement, dans le corps, qui est éloigné de la partie formant rampe, l'ensemble de raccordement comprenant également une bague de verrouillage (20,22) ayant une surface externe avec une section filetée (26,26') et une section d'accès de préhension (28), et une surface interne avec une section cylindrique et une section formant rampe évasée vers l'extérieur, adaptée de manière à coopérer avec la rampe du tube, la section cylindrique étant située sous la partie de la section filetée de la surface externe qui est adjacente à la section d'accès de préhension et la section formant rampe étant située sous la partie de la section filetée de la surface externe qui est éloignée de la section d'accès de préhension, une unité d'accouplement annulaire (32) ayant un diamètre interne correspondant sensiblement au diamètre interne du corps du tube et comprenant un prolongement (40) pouvant être inséré dans la partie terminale du tube et ayant une configuration externe généralement polygonale qui correspond étroitement à la configuration interne de la partie terminale du tube, un raccord terminal (44) pour raccorder l'unité d'accouplement à un autre corps, et une section médiane, filetée extérieurement, située entre le prolongement insérable et le raccord et ayant un diamètre externe supérieur à la dimension radiale interne maximale de la partie terminale du tube, et un manchon (30) comportant des sections extrêmes taraudées (34,36) qui peuvent être vissées respectivement sur l'unité d'accouplement et sur la bague, ce manchon pouvant glisser sur la partie extrême du tube.

2.  Tube en matériau composite à enroulement de filaments suivant la revendication 1 caractérisé en ce qu'il comporte en outre, à l'intérieur du tube (10), une garniture (15) qui s'étend dans l'unité d'accouplement (32).

**Patentansprüche**

1.  In Wickeltechnik hergestelltes Verbundrohr mit einer Kuppelvorrichtung zum axialen Verbinden des in Wickeltechnik hergestellten Verbundrohres (10) an einen anderen Körper, dadurch gekennzeichnet, daß das Rohr eine Körperkomponente (12), eine Endkomponente (16) mit einer im wesentlichen polygonalen inneren Struktur und einem größeren inneren radialen Mindestausmaß als die Körperkomponente, und eine kegelförmig ringförmige Rampenkomponente (14) hat, die integral die Körperkomponente und die Endkomponente verbindet, wobei die gewickelten Fasern von der Endkomponente durch die Rampenkomponente an eine Stelle innerhalb der Körperkomponente reichen, die entfernt ist von der Rampenkomponente; wobei die Ruppelvorrichtung auch umfaßt einen Sicherungsring (20, 22), der eine äußere Oberfläche mit einem Gewindeteil (26, 26') hat und ein Angreifteil (28) und eine innere Oberfläche mit einem zylindrischen Teil und einen außen kegelförmigen Rampenteil, der genau passend zu der Rampe des Rohres angepaßt ist, wobei der zuylindrische Teil unterhalb des Teiles des Außengewindeteiles ist, der an den Angreifteil angrenzt, und der Rampenteil unterhalb des Teiles des Außengewindeteiles ist, der entfernt ist von dem Angreifteil; wobei eine ringförmige Kuppeleinheit (32) einen inneren Durchmesser hat, der im wesentlichen dem inneren Durchmesser der Körperkomponente entspricht, und eine Verlängerung (40) umfaßt, die einsetzbar ist innerhalb der Endkomponente des Rohres und eine im wesentlichen polygonale äußere Struktur hat, die genau mit der inneren Struktur der Endkomponente des Rohres zusammenpaßt, ein Endverbindungsstück (44) zum Verbinden der Kuppeleinheit an einen anderen Körper, und ein Mittelteil mit Außengewinde zwischen der einsetzbaren Verlängerung und dem Verbindungsstück, und der einen äußeren Durchmesser hat, der größer ist als das maximale innere radiale Ausmaß der Endkomponente des Rohres; und eine Überschiebmuffe (30), die Endteile mit Innengewinde (34, 36) hat, die an die Kuppeleinheit bzw. den Ring anschraubbar sind, wobei die Überschiebmuffe über die Endkomponente des Rohres schiebbar ist.

2. In Wickeltechnik hergestelltes Verbundrohr wie in Anspruch 1 beansprucht, des weiteren dadurch gekennzeichnet, daß es ein Futter (15) in dem Rohr (10) beinhaltet, das sich innerhalb der Kuppeleinheit (32) erstreckt.

FIG.1

FIG.2

FIG.3